# EUROPEAN PATENT APPLICATION

(11) **EP 2 785 091 A1**
(43) Date of publication of application: **01.10.2014**
(21) Application number: 13305372.8
(22) Date of filing: 26.03.2013
(51) Int. Cl.: H04W 12/10, H04L 1/00

(54) **Method, apparatus and computer program product for determining validity of Hyper Frame Numbers used for decoding PDCP units**

(71) Applicant: ALCATEL LUCENT, 92100 Boulogne-Billancourt (FR)
(72) Inventor: Wang, Yalou, Swindon, Wiltshire SN5 7DJ (GB)
(74) Representative: Leppard, Andrew John

(57) **Abstract**

A wireless telecommunications receiver method, a wireless telecommunications receiver and a computer program product. The method of determining validity of a hyper frame number used for decoding a data stream comprising packet data convergence protocol packet data units containing content, comprises: i) decoding a received packet data convergence protocol packet data unit using a current hyper frame number to extract the content; and ii) determining whether the current hyper frame number is valid by checking a validity of the content. Through this approach it is possible to determine, by checking the decoded content itself, whether synchronisation of hyper frame numbers used by the transmitter and the receiver is being maintained. This improves the reliability of detecting a decoding failure, since the decoding process itself has no mechanism for such detection of a failure (for example, it has no cyclic redundancy check) and so such failure is not currently detected, but can be determined by examining the content itself.

## Description

### FIELD OF THE INVENTION

The present invention relates to a wireless telecommunications receiver method, a wireless telecommunications receiver and a computer program product.

### BACKGROUND

It is known to generate encoded data packets for transmission from a transmitter to a receiver of a wireless telecommunications network. For example, it is known to receive data packets from a core network at a base station which are then subjected to encoding in accordance with a packet data convergence protocol (PDCP). The packet data convergence protocol unit encodes the data packets to produce packet data units (PDUs). These packet data units are then provided to a radio link controller for onward transmission to user equipment over an air interface. User equipment receives the packet data units and a packet data convergence protocol unit decodes the packet data units and forwards the data packets for subsequent processing.

In order to identify data packets a sequence number is assigned to the packet data units which, in combination with a hyper frame number, together forms the "COUNT" of the packet data units, which is utilised by the packet data convergence protocol unit when encoding or decoding the data packets. In order to reduce transmission overhead, each packet data unit includes the sequence number assigned to that packet data unit, but the hyper frame number is omitted. Instead, both the transmitter and receiver locally maintain the hyper frame number.

Whilst this approach enables packet data units to be transmitted between the transmitter and receiver, difficulties can arise.

Accordingly, it is desired to provide an improved technique for the transmission of data packets.

### SUMMARY

According to a first aspect, there is provided a wireless telecommunications receiver method of determining validity of a hyper frame number used for decoding a data stream comprising packet data convergence protocol packet data units containing content, comprising: i) decoding a received packet data convergence protocol packet data unit using a current hyper frame number to extract the content; and ii) determining whether the current hyper frame number is valid by checking a validity of the content.

The first aspect recognises that a problem with current techniques is that because the hyper frame number is not transmitted between the transmitter and receiver with each packet data unit it is necessary for both the transmitter and the receiver to maintain the hyper frame number locally, since this is used in coding (ciphering) and decoding (deciphering) of the data packets, but that the hyper frame numbers stored locally can become desynchronised which makes it impossible to recover the encoded data packets.

When this happens, and there is a loss of synchronisation of the hyper frame number between the transmitter and the receiver, the packet data convergence protocol unit on the receiver side will still continue to produce decoded data packets and forward these for onward processing, unaware that a lack of synchronisation of the hyper frame number is occurring, and unaware that these data packets are being discarded since their content is considered to be invalid by other units within the receiver.

Accordingly, a wireless telecommunications receiver method may be provided. The method may be for determining a validity of a hyper frame number used for decoding a data stream. The data stream may comprise packet data convergence protocol packet data units, each of which contains content, or user or configuration data. The method may comprise the step of decoding a received data packet convergence protocol data unit using a current or existing hyper frame number which may be stored locally by the receiver in order to extract the content from the packet data convergence protocol packet data unit. The method may also comprise the step of determining whether the current or existing hyper frame number which may be stored locally by the receiver is valid by checking a validity of the decoded content. Through this approach it is possible to determine, by checking the decoded content itself, whether synchronisation of hyper frame numbers used by the transmitter and the receiver is being maintained. This improves the reliability of detecting a decoding failure, since the decoding process itself has no mechanism for such detection of a failure (for example, it has no cyclic redundancy check) and so such failure is not currently detected, but can be determined by examining the content itself.

Embodiments recognise that although hyper frame number recovery algorithms currently exist, they are unable to recover the hyper frame number when there are consecutive sequence numbers missing that exceed half of the hyper frame number space. That is to say, if a consecutive number of data packets forming more than half of a hyper frame are lost, then existing techniques are unable to recover the hyper frame number.

Embodiments also recognise that such loss of large numbers of consecutive data packets can occur due to, for example, a buffer overflow caused by a traffic burst, the temporary loss of the air link between the transmitter and the receiver, or other congestion. When this happens, and there is a loss of synchronisation of the hyper frame number between the transmitter and the receiver, the packet data convergence protocol unit on the receiver side will still continue to produce decoded data packets and forward these for onward processing, unaware that a lack of synchronisation of the hyper frame number is occurring, and unaware that these data packets are being discarded since their content is considered to be invalid by other units within the receiver, as mentioned above.

Embodiments also recognise that whilst it is possible to carry the hyper frame number in each packet data convergence protocol packet or every 'n' such packets, this increases messaging overhead and causes incompatibility with the current data structure. Also, specific hyper frame number report signalling would introduce similar problems. Likewise, although it may be possible to monitor lost packets and impose rigorous flow control to limit such loss, when the data rate increases or the packet size is small, performing such flow control is difficult to do and incurs a high performance penalty. Hence, the first aspect recognises that current and proposed techniques for maintaining the synchronisation of hyper frame number between the transmitter and the receiver are inadequate.

In one embodiment, the method comprises: when it is determined that the current hyper frame number is invalid, repeating the steps i) and ii) with an adjusted hyper frame number. Accordingly, when it is detected that the hyper frame number is invalid, the packet data units may be decoded using an adjusted or different hyper frame number and the validity of the content extracted using that adjusted hyper frame number may be checked. Accordingly, once failure is detected, decoding will occur using a different hyper frame number in order to determine whether valid content can be produced. This can help to provide valid content when invalid content would otherwise be provided.

In one embodiment, the adjusted hyper frame number comprises at least one of an increased and a decreased current hyper frame number. It can be assumed that a good starting point for determining the hyper frame number being used by the transmitter is the hyper frame number currently being used by the receiver, and performing increments and/ or decrements of this hyper frame number is likely to quickly lead to resynchronisation of the hyper frame number between the transmitter and the receiver.

In one embodiment, the adjusted hyper frame number comprises at least one of a plurality of increased and decreased current hyper frame numbers. Accordingly, more than one adjusted hyper frame number may be utilised in order to try to re-establish synchronisation.

In one embodiment, the adjusted hyper frame number comprises at least one of a sequence of increased and decreased current hyper frame numbers comprising (C+-1, C+-2,...,C+-I), where C is the current hyper frame number and I is an integer. It is highly likely that the adjusted hyper frame number will be very close to the current hyper frame number, and making a small value increment and decrement, and increasing the size of these increments and decrements will quickly lead to resynchronisation.

In one embodiment, the method comprises: repeating the steps i) and ii) with the plurality of adjusted hyper frame numbers in parallel. Accordingly, a number of adjusted hyper frame numbers may be utilised together in parallel or simultaneously in order to resynchronise the hyper frame number as quickly as possible. Although this consumes additional resources, the occurrence of such resource use will typically be relatively low and this enables the hyper frame numbers resynchronisation to occur as quickly as possible.

In one embodiment, the method comprises: repeating the steps i) and ii) with the plurality of adjusted hyper frame numbers sequentially. Accordingly, existing resources may be utilised to check each adjusted hyper frame number one after the other until resynchronisation occurs.

In one embodiment, the method comprises: buffering packet data convergence protocol packet data units until a valid hyper frame number is determined. Accordingly, the data packets may be buffered until hyper frame number resynchronisation occurs.

In one embodiment, the method comprises: replacing the current hyper frame number with that adjusted hyper frame number which provides valid content. Accordingly, when the correct hyper frame number is determined the current or existing locally maintained hyper frame number may be overwritten with the adjusted hyper frame number so that correct decoding can occur.

In one embodiment, the content comprises an internet protocol packet and the step of checking the validity of the content comprises performing robust header decompression. Accordingly, it is possible to reutilise the results of any robust header decompression, which automatically provides an indicator of whether such decompression occurred correctly, and so identifies whether the content is likely to be valid or not.

In one embodiment, the content comprises an internet protocol packet and the step of checking the validity of the content comprises checking a signature of the internet protocol packet. Accordingly, a particular signature or combination of fields of the content may be checked in order to determine the validity of the content.

In one embodiment, wherein the step of checking the signature of the internet protocol packet comprises checking a validity of a checksum field of the header of the internet protocol packet. Accordingly, where a checksum field is provided within the content, this may be checked to check the validity of that content.

In one embodiment, the step of checking the signature of the internet protocol packet comprises comparing fields of the internet protocol packet against stored fields of internet protocol packets stored when the data stream is first established. Accordingly, a number of fields may be stored when the data stream is first established (typically whilst the hyper frame number is still set at zero) and these static fields (i.e. fields for which the content will not change) are stored as a signature against which the content maybe checked thereafter.

In one embodiment, the fields comprise at least one of a version field, a source address field and a destination address field. It will be appreciated that these are examples of fields which contain information that is unlikely to change during the transmission of the data stream.

In one embodiment, the step ii) is performed periodically. Accordingly, the validity of the current hyper frame number maintained locally may be checked after a defined or configured time period in order to ensure that synchronisation is maintained.

In one embodiment, the step ii) is performed every n packets. Accordingly, the validity of the existing hyper frame number may be checked for every n packets in order to maintain synchronisation.

In one embodiment, the step ii) is performed when a triggering event occurs. Accordingly, when a particular, defined triggering event occurs then the validity of the existing hyper frame number may be checked.

In one embodiment, the triggering event comprises at least one of a handover and a radio link failure. Desynchronisation of the hyper frame number becomes more likely during handover or radio link failure.

In one embodiment, the content comprises a sequence number and the triggering event comprises a reduction in sequence number. Hence, when the sequence number reduces (such as would occur when the sequence number wraps around from it maximum to zero or when packets are received out of order) the synchronisation of the hyper frame number may be checked.

In one embodiment, the trigger event comprises a number of robust header decompression failures.

According to a second aspect, there is provided a computer program product operable, when executed on a computer, to perform the method steps of the first aspect.

According to a third aspect, there is provided a wireless telecommunications receiver operable to determining validity of a hyper frame number used for decoding a data stream comprising packet data convergence protocol packet data units containing content, the wireless telecommunications receiver comprising: decoding logic operable to decode a received packet data convergence protocol packet data unit using a current hyper frame number to extract the content; and determining logic operable to determine whether the current hyper frame number is valid by checking a validity of the content.

In one embodiment, the wireless telecommunications receiver comprises control logic operable, when it is determined that the current hyper frame number is invalid, to provide the decoding logic and the determining logic with an adjusted hyper frame number.

In one embodiment, the adjusted hyper frame number comprises at least one of an increased and a decreased current hyper frame number.

In one embodiment, the adjusted hyper frame number comprises at least one of a plurality of increased and decreased current hyper frame numbers.

In one embodiment, the adjusted hyper frame number comprises at least one of a sequence of increased and decreased current hyper frame numbers comprising (C+-1, C+-2,...,C+-I), where C is the current hyper frame number and I is an integer.

In one embodiment, the decoding logic to decode a received packet data convergence protocol packet data unit and the determining logic is operable to determine whether the current hyper frame number is valid with the plurality of adjusted hyper frame numbers in parallel.

In one embodiment, the decoding logic to decode a received packet data convergence protocol packet data unit and the determining logic is operable to determine whether the current hyper frame number is valid with the plurality of adjusted hyper frame numbers sequentially.

In one embodiment, the wireless telecommunications receiver comprises buffering logic operable to buffer packet data convergence protocol packet data units until a valid hyper frame number is determined.

In one embodiment, the control logic is operable to replace the current hyper frame number with that adjusted hyper frame number which provides valid content.

In one embodiment, the content comprises an internet protocol packet and the determining logic is operable to check the validity of the content by performing robust header decompression.

In one embodiment, the content comprises an internet protocol packet and the determining logic is operable to check the validity of the content by checking a signature of the internet protocol packet.

In one embodiment, the determining logic is operable to check the signature of the internet protocol packet by checking a validity of a checksum field of the header of the internet protocol packet.

In one embodiment, the determining logic is operable to check the signature of the internet protocol packet by comparing fields of the internet protocol packet against stored fields of internet protocol packets stored when the data stream is first established.

In one embodiment, the fields comprise at least one of a version field, a source address field and a destination address field.

In one embodiment, the determining logic is operable to check whether the current hyper frame number is valid periodically.

In one embodiment, the determining logic is operable to check whether the current hyper frame number is valid every n packets.

In one embodiment, the determining logic is operable to check whether the current hyper frame number is valid when a triggering event occurs.

In one embodiment, the triggering event comprises at least one of a handover and a radio link failure.

In one embodiment, the content comprises a sequence number and the triggering event comprises a reduction in sequence number.

In one embodiment, the trigger event comprises a number of robust header decompression failures.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 shows the PDCP PDU header structure and illustrates 7 bit and 12 bit sequence number PDUs;
Figure 2 illustrates the PDCP protocol structure and data flows;
Figure 3 illustrates the use of the RoHC decompression failure detection in a hyper frame number recovery technique according to one embodiment;
Figure 4 shows a generic IP header structure illustrating various fields for both IPv4 and IPv6;
Figure 5 illustrates hyper frame number recovery based on the IPv4 checksum according to one embodiment;
Figure 6 illustrates hyper frame number recovery using an IPv6 header signature check according to one embodiment; and
Figure 7 illustrates the parallel adjustment of the hyper frame number according to one embodiment.

### DESCRIPTION OF THE EMBODIMENTS

### Overview

Before discussing the embodiments in any more detail, first an overview will be provided. As mentioned above, embodiments provide a technique to detect when a loss in hyper frame number synchronisation occurs between a transmitter and a receiver. Maintaining synchronisation between the hyper frame number used by a transmitter and a receiver is essential in order to be able to decode PDCP PDUs transmitted between the transmitter and receiver. In wireless telecommunications systems, these PDCP PDUs play an important part on the user plane to carry user data and control information and support critical functions such as data ciphering, internet protocol (IP) packet header compression and mobility data forwarding.

For each PDCP PDU, a sequence number is assigned which is either 7 bits or 12 bits (and is expected to increase to 15 bits). To increase the PDCP PDU numbering space, each packet is also assigned a hyper frame number which increments by a value of one when the sequence number swaps around (i.e. reverts from its maximum amount back to zero). The sequence number and hyper frame number together form the COUNT, which is a 32 bit number used to identify each PDCP PDU. In order to keep the PDCP overhead to a minimum, only the sequence number part is actually transmitted over the air interface. The hyper frame number is maintained locally by both the sender and the receiver (for example, user equipment and base stations).

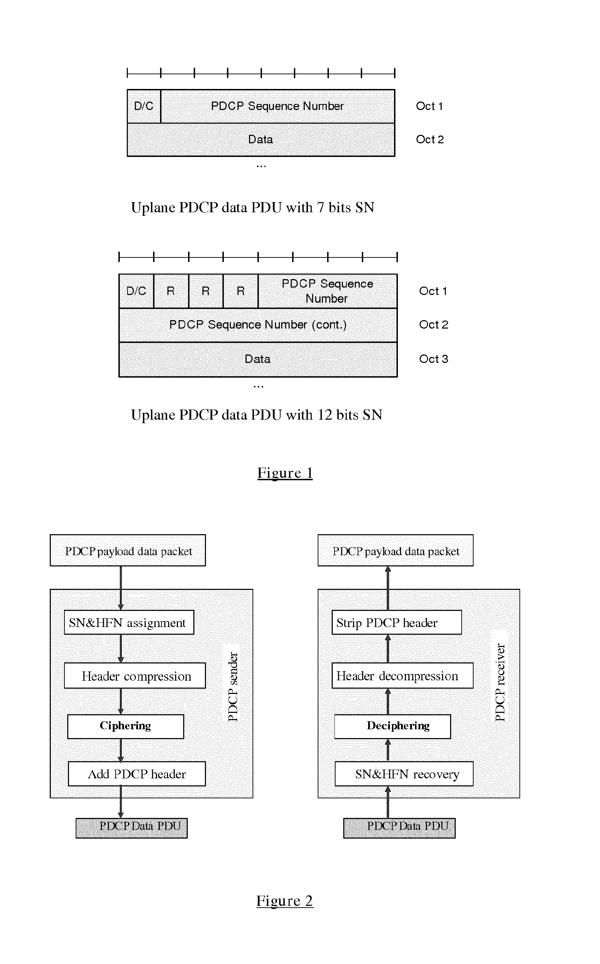

Figure 1 shows the PDCP PDU header structure and illustrates 7 bit and 12 bit sequence number PDUs.

Figure 2 illustrates the PDCP protocol structure and data flows.

When data ciphering is performed by the sender and data deciphering is performed by the receiver, COUNT is used as one input parameter to the ciphering and deciphering algorithms. It can be seen, therefore, that to ensure deciphering success, it is essential that both the sender and the receiver uses the same COUNT. Whilst the sequence number is carried in the PDCP PDU, the hyper frame number is not, and so the receiver is required to derive the hyper frame number from the received sequence number sequences and to deal with any missed or out-of-order sequence numbers.

Whilst current techniques have limited ability to recover the hyper frame number in certain situations, they cannot recover the hyper frame number when there are consecutive sequence numbers missing that exceed half the hyper frame number space. Therefore, when ciphering is enabled, the PDCP protocol has a restriction on the maximum number of consecutive loss PDCP PDUs, which is half of the PDCP hyper frame size. The hyper frame size is 128 PDCP PDUs when the PDCP sequence number is 7 bits, and is 4096 PDCP PDUs when the PDCP sequence number is 12 bits. If lost PDCP PDUs are more than half these numbers, the hyper frame number becomes desynchronised between the transmitter and the receiver, causing deciphering failure. Hyper frame number desynchronisation can happen if there are large numbers of data packets lost over the air interface or ifpackets are lost internally due to buffer overflow caused by a traffic burst, temporary loss of the air interface, or any other congestion. For a PDCP flow that runs over radio link control acknowledge mode (RLC AM), the user plane will be lost forever and will never recover since there is no way to get the hyper frame number back into synchronisation. For PDCP flows that run over radio link control unacknowledged mode (RLC UM), the user plane can only recover when user equipment handover occurs, which results in both the sequence number and the hyper frame number being reset back to zero. In the meantime, all traffic will be discarded by the receiver as being invalid.

Embodiments provide a hyper frame number desynchronisation detection and recovery algorithm which can recover a correct hyper frame number with no change to current PDCP PDU structures or processes, with a very high probability of success. In particular, embodiments detect deciphering failure since the deciphering unit provided within the PDCP decoder has no mechanism to detect such deciphering failure (for example, there is no cyclic redundancy check) and so the detecting deciphering failure needs to be possible from the deciphered packet itself.

Embodiments also provide a technique which, once such failure is detected, causes the deciphering unit to try using a different hyper frame number and either try deciphering the same PDCP PDU again or use that different hyper frame number when deciphering subsequent new PDCP PDUs.

Embodiments recognise that when deciphering fails due to a loss in hyper frame number desynchronisation, the hyper frame number will generally have become desynchronised due to a large number of loss PDCP PDUs and it is likely that the hyper frame number needs a small adjustment in order to re-establish hyper frame number synchronisation.

For almost all user plane traffic, the user data is made up of IP packets, which are the PDCP PDU payload (the data payload part of the PDCP data PDU shown in Figure 1). Ciphering and deciphering is only applied to this data part (that is, ciphering and deciphering is only applied to the IP packets). When deciphering fails, the output of the PDCP receiver will be incomprehensible, garbage packets, not confined to the IP packet structure.

Three different arrangements for detecting deciphering failure and hyper frame number recovery algorithms will now be described.

### Arrangement 1- when IP header compression is applied

In a 3rd generation partnership project (3GPP) long term evolution (LTE) network, header compression is defined using a standard Robust Header Compression (RoHC) protocol. Header compression on the sender side and decompression on the receiver side are performed after ciphering and deciphering. It is also possible that RoHC is turned off.

When RoHC is used on the receiver side, the RoHC decompressor itself will detect the decompression failure via a cyclic redundancy check, which is built in to the RoHC protocol itself. Using this information, a deciphering failure can be detected with high confidence; such deciphering may be caused by a loss of synchronisation of the hyper frame number which is used by the deciphering unit which feeds the RoHC decompressor.

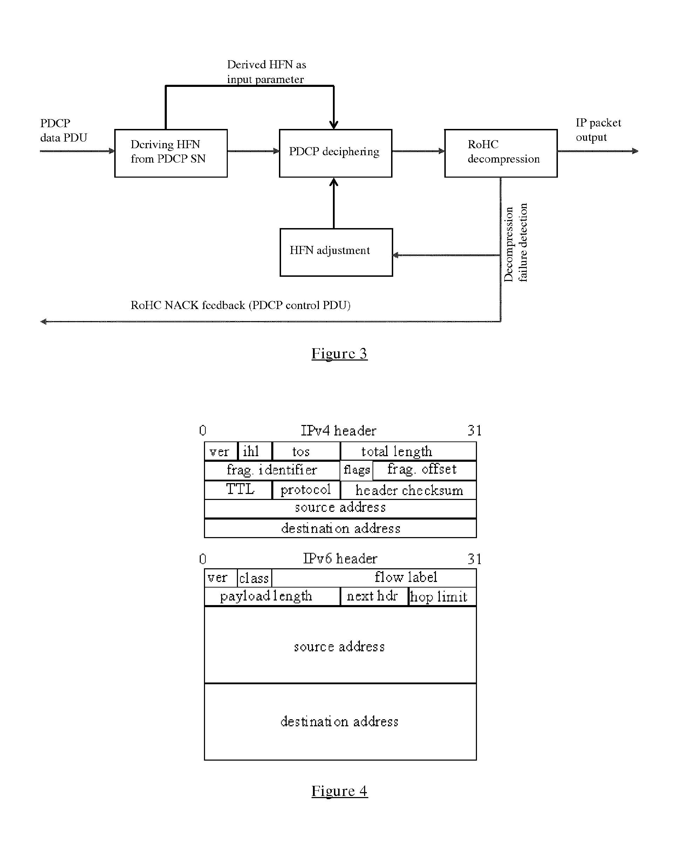

Figure 3 illustrates the use of the RoHC decompression failure detection in a hyper frame number recovery technique. As can be seen in Figure 3, whenever the robust header decompression unit detects a decompression failure, it is obliged to send a Negative Acknowledgement (NACK) via a reverse link feedback channel to the RoHC compressor unit. This NACK can also be used as the decompression failure indicator for hyper frame number adjustment. However, the hyper frame adjustment number adjustment unit need not be immediately triggered by just one such failure. This is because decompression failure will also occur occasionally within the RoHC protocol (due to compression mode/ state mismatch, packet residual error, etc.). Therefore, the hyper frame number adjustment unit may use a configurable triggering threshold so that adjustment of the hyper frame number only occurs after 'M' such consecutive failures.

### Arrangement 2 - IPv4 headers with no header compression

When no RoHC is utilised, there is no opportunity to use a robust header compression decompression failure indication to indicate a deciphering failure, and so in this case the deciphering failure has to be judged from the output packet provided by the deciphering unit itself. Since IP headers have a structured header format, one approach would be to compare the output to a standard IP packet structure, such as various header fields, to try to identify a valid IPv4 packet. However, this method requires a high degree of header field processing. Accordingly, embodiments use the checksum field present in an IPv4 header. Any IPv4 processing node is already required to compute the checksum and so this does not add any additional processing.

Figure 4 shows a generic IP header structure illustrating various fields for both IPv4 and IPv6.

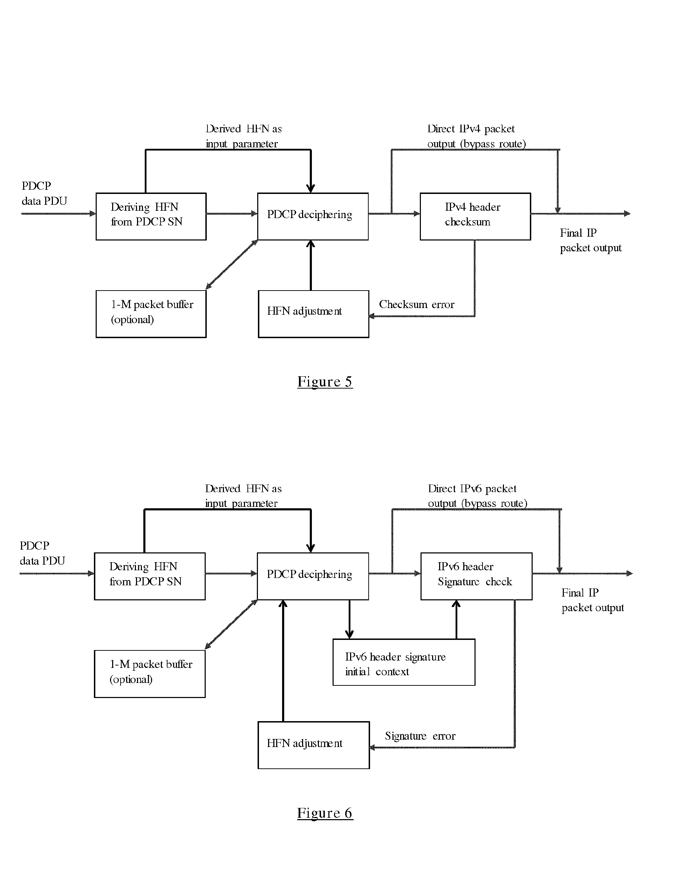

Figure 5 illustrates hyper frame number recovery based on the IPv4 checksum.

When a PDCP data PDU arrives, the current PDCP sequence number processing will be used to derive the hyper frame number and then the hyper frame number and sequence number are combined to provide the COUNT which is used as one input parameter for the deciphering unit. The deciphered IPv4 packets provided by the deciphering unit go through the IPv4 checksum computation. If the IPv4 checksum computation passes, the packet is then delivered to upper layers for further processing. If the IPv4 checksum computation fails, the packet is discarded and a checksum error is logged. If M such consecutive errors have been encountered, this indicates with high confidence that there has been a loss in hyper frame number synchronisation.

The hyper frame number adjustment unit will then adjust the hyper frame number (+/-1 or more) so that the new hyper frame number will be used when processing future PDCP data PDUs.

In those embodiments where the IPv4 checksum is not computed, it can be arranged that every one out of M packets will be subject to the checksum check, with others bypassing this check and going directly to the output. If a checksum error is found, all subsequent (M-1) packets may be checked as above. This arrangement will still recover the hyper frame number, but will miss M-1 chances.

Another option is to provide PDCP PDU buffers that can hold a few packets (such as one to M packets as above). Normally, one PDCP PDU copy is buffered, while the original packet goes through the deciphering and checksum check. If it passes the checksum check, the one packet buffer will be emptied for the next packet. If the checksum fails, this buffer will hold a few packets until the hyper frame number has been recovered to the correct value and then the above procedure may be repeated.

### Arrangement 3 - Ipv6 headers with no header compression

Since IPv6 headers have no checksum (as illustrated in Figure 4) the above IPv4 header checksum arrangement cannot be utilised. In this case, static fields in the header can be checked as a signature to indicate valid PDCP PDUs. Embodiments use at least one of version and source address fields as they are static for each PDCP flow in uplink, and version and destination fields as they are static for each PDCP flow in downlink. Of course, it will be appreciated that other combinations of such fields maybe utilised.

Figure 6 illustrates hyper frame number recovery using an IPv6 header signature check. As can be seen in Figure 6, the procedures and options are generally the same as that illustrated for IPv4 above. The main difference is that an initial IPv6 signature context is established as a reference input to the header signature check. This can be done by storing the first few packets of each PDCP data flow, which can be assumed to be at a time when hyper frame number desynchronisation cannot occur. Accordingly, the signature can be the version and source/ destination address fields extracted from the first few packets.

In another embodiment, a timer maybe utilised. When the timer expires, the IPv4 checksum or IPv6 header signature is checked, rather than checking every N packets. This embodiment is useful when there is a very high throughput, so processing load is already very high even for one out of every N packets.

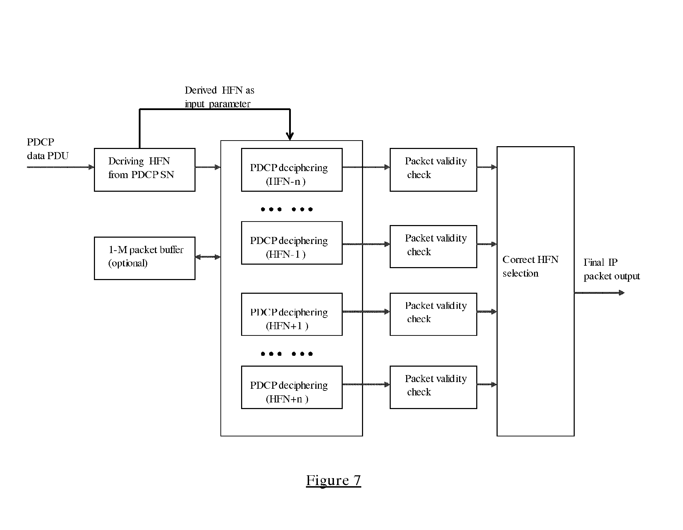

Each of the techniques mentioned above can detect when a possible hyper frame number desynchronisation has occurred and invoke the hyper frame number adjustment unit to adjust the hyper frame number so that deciphering can occur with a different hyper frame number either using the current PDCP PDU or future PDCP PDUs. The adjustment of the hyper frame number can occur and be evaluated sequentially or, as shown in Figure 7, can occur concurrently, simultaneously or in parallel.

When the hyper frame number has been declared as being desynchronised and hyper frame number adjustment is needed, several deciphering units may be employed concurrently to do the deciphering with several adjusted hyper frame numbers (such as hyper frame number +/- 1, +/-2, .., +/-n). It will be appreciated that n does not need to be a large number, since a small number (such as 1 or 2) offset to the current hyper frame number will usually recover synchronisation of the hyper frame number. Each deciphering unit's output packet goes through the above validity checks (for example, RoHC decompression, IPv4 checksum, or IPv6 header signature). If the hyper frame number is recovered, there will only be one output packet which is valid and the new hyper frame number which provided the valid output packet is selected as the current hyper frame number in order to restore synchronisation and the whole PDCP procedure can continue.

As mentioned above, the input to these deciphering units can be either the next PDCP PDU with the hyper frame number derived from that PDCP PDU, or the 1 to M packets in the buffer if that option has been used.

The advantage of using concurrent deciphering is that it speeds up the packet processing, saving packet looping with a hyper frame number change through the same single deciphering unit. This reduces the packet processing delay, so no impact on the overall traffic flow performance is experienced. Since hyper frame number recovery triggers are a rare event, using several deciphering units will not impose a high cost on the deciphering resources.

However, it is also possible to use one deciphering unit and to loop back the PDCP PDU for deciphering and packet validity check n times. If it is desirable not to fix n (for example, when n is large) and/ or the recovery wants to continue to try until a correct hyper frame number is found (or until it gives up), the single deciphering loop back can also be used, with increased delay of the user plane traffic.

Accordingly, it can be seen that embodiments provide a simple yet very effective hyper frame number recovery mechanism which maintains user plane traffic. If such hyper frame number resynchronisation was not possible, the user plane traffic would cease after hyper frame synchronisation was lost.

As mentioned above, current techniques provide no solution to such hyper frame number desynchronisation. Although other approaches, such as using hyper frame number synchronisation signalling or new data structures with a hyper frame number field may be used, these require significant changes to the current standards. The embodiments mentioned above do not need any additional signalling, nor do they need any changes to current network and protocol architecture. This approach provides a universal solution for PDCP hyper frame number recovery when desynchronisation happens. Embodiments provide two basic techniques; deciphering failure detection is done by a packet validity check, and after hyper frame number desynchronisation is detected the hyper frame number is changed and then deciphering is repeated.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/ or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown. The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A wireless telecommunications receiver method of determining validity of a hyper frame number used for decoding a data stream comprising packet data convergence protocol packet data units containing content, comprising:
i) decoding a received packet data convergence protocol packet data unit using a current hyper frame number to extract said content; and
ii) determining whether said current hyper frame number is valid by checking a validity of said content.

2. The method of claim 1, comprising:
when it is determined that said current hyper frame number is invalid, repeating said steps i) and ii) with an adjusted hyper frame number.

3. The method of claim 1 or 2, wherein said adjusted hyper frame number comprises at least one of an increased and a decreased current hyper frame number; a plurality of increased and decreased current hyper frame numbers; and at least one of a sequence of increased and decreased current hyper frame numbers comprising (C+-1, C+-2,...,C+-I), where C is said current hyper frame number and I is an integer.

4. The method of any preceding claim, comprising at least one of: repeating said steps i) and ii) with said plurality of adjusted hyper frame numbers in parallel; and repeating said steps i) and ii) with said plurality of adjusted hyper frame numbers sequentially.

5. The method of any preceding claim, comprising:
buffering packet data convergence protocol packet data units until a valid hyper frame number is determined.

6. The method of any preceding claim, comprising:
replacing said current hyper frame number with that adjusted hyper frame number which provides valid content.

7. The method of any preceding claim, wherein said content comprises an internet protocol packet and said step of checking said validity of said content comprises performing robust header decompression.

8. The method of any preceding claim, wherein said content comprises an internet protocol packet and said step of checking said validity of said content comprises checking a signature of said internet protocol packet.

9. The method of claim 8, wherein said step of checking said signature of said internet protocol packet comprises checking a validity of a checksum field of said header of said internet protocol packet.

10. The method of claim 8 or 9, wherein said step of checking said signature of said internet protocol packet comprises comparing fields of said internet protocol packet against stored fields of internet protocol packets stored when said data stream is first established.

11. The method of any preceding claim, wherein said step ii) is performed at least one of periodically; every n packets; and when a triggering event occurs.

12. The method of claim 11, wherein said triggering event comprises at least one of a handover; a radio link failure; and a number of robust header decompression failures.

13. The method of claim 11 or 12, wherein said content comprises a sequence number and said triggering event comprises a reduction in sequence number.

14. A computer program product operable, when executed on a computer, to perform the method steps of any preceding claim.

15. A wireless telecommunications receiver operable to determining validity of a hyper frame number used for decoding a data stream comprising packet data convergence protocol packet data units containing content, said wireless telecommunications receiver comprising:
decoding logic operable to decode a received packet data convergence protocol packet data unit using a current hyper frame number to extract said content; and
determining logic operable to determine whether said current hyper frame number is valid by checking a validity of said content.

## Amended claims

### Amended claims in accordance with Rule 137(2) EPC.

**1.** A wireless telecommunications receiver method of determining validity of a hyper frame number used for decoding a data stream comprising packet data convergence protocol packet data units comprising payload data and a header, said payload data containing content, comprising:
i) decoding a received packet data convergence protocol packet data unit using a current hyper frame number to extract said content; and
ii) determining whether said current hyper frame number is valid by checking a validity of said content.

**2.** The method of claim 1, comprising:
when it is determined that said current hyper frame number is invalid, repeating said steps i) and ii) with an adjusted hyper frame number.

**3.** The method of claim 1 or 2, wherein said adjusted hyper frame number comprises at least one of an increased and a decreased current hyper frame number; a plurality of increased and decreased current hyper frame numbers; and at least one of a sequence of increased and decreased current hyper frame numbers comprising (C+-1, C+-2,...,C+-I), where C is said current hyper frame number and I is an integer.

**4.** The method of any preceding claim, comprising at least one of: repeating said steps i) and ii) with said plurality of adjusted hyper frame numbers in parallel; and repeating said steps i) and ii) with said plurality of adjusted hyper frame numbers sequentially.

**5.** The method of any preceding claim, comprising:
buffering packet data convergence protocol packet data units until a valid hyper frame number is determined.

**6.** The method of any preceding claim, comprising:
replacing said current hyper frame number with that adjusted hyper frame number which provides valid content.

**7.** The method of any preceding claim, wherein said content comprises an internet protocol packet and said step of checking said validity of said content comprises performing robust header decompression of said internet protocol packet.

**8.** The method of any preceding claim, wherein said content comprises an internet protocol packet and said step of checking said validity of said content comprises checking a signature of said internet protocol packet.

**9.** The method of claim 8, wherein said step of checking said signature of said internet protocol packet comprises checking a validity of a checksum field of said header of said internet protocol packet

**10.** The method of claim 8 or 9, wherein said step of checking said signature of said internet protocol packet comprises comparing fields of said internet protocol packet against stored fields of internet protocol packets stored when said data stream is first established.

**11.** The method of any preceding claim, wherein said step ii) is performed at least one of periodically; every n packets; and when a triggering event occurs.

**12.** The method of claim 11, wherein said triggering event comprises at least one of a handover; a radio link failure; and a number of robust header decompression failures.

**13.** The method of claim 11 or 12, wherein said content comprises a sequence number and said triggering event comprises a reduction in sequence number.

**14.** A computer program product operable, when executed on a computer, to perform the method steps of any preceding claim.

**15.** A wireless telecommunications receiver operable to determining validity of a hyper frame number used for decoding a data stream comprising packet data convergence protocol packet data units comprising payload data and a header, said payload data containing content, said wireless telecommunications receiver comprising:
decoding logic operable to decode a received packet data convergence protocol packet data unit using a current hyper frame number to extract said content; and
determining logic operable to determine whether said current hyper frame number is valid by checking a validity of said content.
